# EUROPEAN PATENT APPLICATION

(11) **EP 1 045 362 A1**
(43) Date of publication of application: **18.10.2000**
(21) Application number: 00303243.0
(22) Date of filing: 17.04.2000
(51) Int. Cl.: G09B 17/02

(54) **Visual reading aid**

(30) Priority: 16.04.1999 GB 9908787
(71) Applicant: CTP Coil Limited, Berkshire SL1 4DW (GB)
(72) Inventor: Jordan, Ian, Cullen, Bamffshire, AB56 4UW (Scotland) (GB)
(74) Representative: Curtis, Philip Anthony

(57) **Abstract**

A visual tracking device (10) comprises a light screening member (12) having a relatively high light transmission region (50) and a relatively low light transmission region (52) substantially surrounding the relatively high light transmission region (50). By means of this arrangement, text, symbols or other markings underlying the high light transmission region (50) are readily discernable and text, symbols and other markings underlying the low light transmission region (52) are less readily discernable.

## Description

This invention relates to visual tracking device. More particularly the invention relates to a device which helps to improve the clarity with which selected text, symbols or other markings can be perceived.

According to one aspect of the present invention there is provided a visual tracking device comprising a light screening member having a relatively high light transmission region and a relatively low light transmission region adjacent the relatively high light transmission region, whereby markings underlying the high light transmission region are readily discernable and markings underlying the low light transmission region are less readily discernable.

The purpose of the low transmission region is to reduce pattern glare from text underlying the low transmission region in order to make it easier to see text or other markings underlying the high transmission region. Pattern glare is produced as a direct response to the contrast and spatial distribution of printed matter. We believe that by reducing the visibility of the peripheral areas around text that is being read it is possible to reduce the occurrence of physiological diplopia. Thus, the visual tracking device according to the invention will be useful for people with various visual or reading difficulties. For example, people having reduced visual acuities on the printed word will find that the present invention helps them to maintain focus.

The invention will be particularly useful for people suffering from dyslexia. It is likely that a high proportion of dyslexics have pattern glare as a component of their condition, and the use of the device according to the invention will help them alleviate this problem. A significant proportion of children learning to read will find that the device according to the invention will allow them to develop reading skills earlier. The use of the device according to the invention also improves saccadal eye movement.

In the preferred embodiment, the low transmission region is positioned relative to the high transmission region such that, when the device is positioned on a page containing lines of text, the high transmission region permits viewing of a line of text to be read, and the low transmission region at least partially obscures any lines of text above and below the line of text to be read. Although, the invention is especially useful for reading lines of text on a page, it may also be useful for reading other arrangements of text or symbols. In practice, the low transmission region will substantially surround the high transmission region, but it is not necessary that the high transmission region is completely surrounded: all that is necessary is that the low transmission region obscures and text, symbols or markings which interfere with the reading of the matter to be read.

The high transmission region will usually be elongate - this is the most useful shape for use with reading text, as it enables users to "track" the text along the length of the high transmission region. In general, the high transmission region will have a length selected to be, at most, approximately equal to the length of the lines of the text to be read, and will have a width selected to be approximately equal to the line spacing. The width of the high transmission region will typically be from 3 to 7 mm (i,e., the width of a typical line of text), and the length will typically be from 40 to 100 mm (i,e., the length of a typical line of text), but other sizes may be appropriate in some circumstances.

The low transmission region should substantially surround the high transmission region. The purpose of the low transmission region is to obscure text above and below the line to be read, so the low transmission region needs to be positioned relative to the high transmission region to achieve this function. Thus, for an elongate high transmission region, the low transmission region should be positioned both above and below the long edges of the high transmission region. However, it is not necessary for the low transmission region to surround the ends of the high transmission region.

The high transmission region must have a higher light transmission than the lower light transmission region. We prefer that the high transmission region is substantially transparent, i.e., that the light transmission is substantially 100%. In general, the high transmission region may have a light transmission at least 10% above the light transmission of the low transmission region, and, preferably, the high transmission region has a light transmission at least 40-50% above the light transmission of the low transmission region.

The high transmission region may comprise an aperture extending through the light screening member. Alternatively the high transmission region may comprise a glass or plastics material, which is preferably transparent.

We have found that it is very desirable that the low transmission region is not opaque. It is preferred that the light transmission of the low transmission region is in the range 10% to 90%, more preferably 40% to 60 % and most preferably around 50%.

The reduction in light transmission of the low transmission region may be provided in a number of ways. For example, the light screening member may be tinted in the low transmission region in order to reduce the light transmission therethrough. Alternatively, the light screening member may include a filter disposed in the low transmission region to reduce the light transmission therethrough. The tint or filter may be any desired colour, including grey, black, red, green yellow and blue. The tint or filter may be coloured such that it preferentially absorbs or reflects selected wavelengths of light. We prefer that the colour of the tint or filter is either neutral grey or blue.

Another way to reduce the light transmission of the low transmission region is to provide a roughened texture on the surface of the light screening member in the low transmission region.

In our preferred embodiment, we reduce the light transmission of the low transmission region by providing a plurality of discrete low transmission areas on the surface of (or within) the light screening member in the low transmission region. The size and density of the discrete low transmission areas should be selected to provide the required light transmission for the low transmission region. The discrete areas may be provided in the forms of dots or other markings. The light transmission of each of the discrete areas would usually be less than the overall light transmission of the low transmission region, and it is preferred that each of the discrete areas is substantially opaque. The discrete areas may be any desired colour, including grey, black, red, green, yellow and blue. The discrete areas may be coloured such that they preferentially absorb or reflect selected wavelengths of light. We prefer that the colour of the discrete areas is either neutral grey or blue.

The discrete areas may be arranged in a regular or irregular array, and may be any desired shape, including circular and square. As mentioned above, the size of the discrete areas relative to the space between them is selected to give the required light transmission.

There would usually be from 20 to 200 discrete areas/inch (about 8 to 80 discrete areas/cm), i.e., about 400 to 40,000 discrete areas per square inch (about 64 to 6400 discrete areas/cm²); however, finer or coarser pitches are possible. A fine pitch would generally have about 150 discrete areas/inch (about 60 discrete areas/cm), or more, and this will "grey out" the text underlying the low transmission region sufficiently to reduce pattern glare. In one of our preferred embodiments, the number of discrete areas per inch is 150 and the light transmission of the low transmission region is 50%. A coarse pitch would generally have about 50 discrete areas/inch (about 20 discrete areas/cm), or less; a coarse pitch has the additional advantage that it tends to break up the words underlying the low transmission region, and this effect may be of benefit to some users. Pitches between 50 and 150 discrete areas/inch (about 20 to 60 discrete areas/cm) are, of course, possible.

It is preferred that the discrete areas have a diameter of about 0.1 to 0.2 mm. The most preferred size is about 5 mil (0.127 mm).

Typically, the light screening member is adapted to rest directly on a page to be read. In an alternative embodiment, spacers may be provided, which are adapted to engage the page and space the light screening member therefrom.

The light screening member may be provided in any convenient form. It may be a rigid plate having a thickness of, for example, 5 to 30 mm, or a flexible film having a thickness of, for example, 0.001 to 5 mm. The light transmission member is typically provided as a transparent glass or plastics material which has been treated in some way to provide the low light transmission region.

In one embodiment, the light screening member comprises a single layer, and the low transmission region is provided on the surface of the member and/or within the volume of the member. For example, the surface of the light screening member could be treated to reduce the light transmission; or light screening member could be tinted throughout its volume to reduce the light transmission.

In another embodiment, the light screening member comprises two layers, one of which comprises a substrate having a light transmission substantially equal to the light transmission of the high transmission region, and the other of which comprises a mask having a light transmission substantially equal to the light transmission of the low transmission region. The substrate may be, for example, a rigid plate having a thickness of, for example, 5 to 30 mm, or a flexible film having a thickness of, for example, 0.001 to 5 mm. The substrate is typically provided as a transparent glass or plastics material. The mask is preferably a flexible film having a thickness of, for example, 0.001 to 5 mm. The mask may comprise a filter of a desired colour, an array of discrete areas, or a roughened surface, as described above. The mask may be adhered to the substrate by a conventional pressure sensitive adhesive. More than one mask may be provided on the substrate.

It is not essential for the mask to be a continuous layer. For example, the array of discrete areas may be provided on the substrate by means of a transfer. In this arrangement an array of discrete areas is initially bonded to a support layer of a transfer, and is subsequently transferred, as an array of separate discrete areas, onto the substrate.

Thus, in accordance with another aspect of the invention there is provided a method of making a visual tracking member as described above comprising applying a transfer layer comprising a release layer having an array of said discrete areas thereon to a surface of the substrate, transferring the array of discrete areas from the release layer to the surface of the substrate, and removing the release layer from the substrate.

An example of a commercially available material useful as the mask layer is available from Letraset under the trade designation LT33, which has 50 dots per inch.

It is desirable that the visual tracking device further includes a lens, most preferably a converging lens such as a convex lens. The lens serves to magnify text, symbols or other markings underlying the high transmission region. In one embodiment the light screening member and the lens are provided in the form of an integral block. The base of the block may be provided with a flat surface adapted to engage a page, and the masking layer may be provided on said flat surface. The lens may be arranged at the upper part of the block.

In another embodiment, the lens is separate from, and spaced from, the light screening member; usually the lens would be arranged on the opposite side of the light screening member to the page of text. Spacing means may be provided to space the lens from the light screening member.

If desired, the visual tracking device may include a light source for improving the illumination.

According to another aspect of the invention there is provided the use of a device described above as a reading aid.

According to another aspect of the invention there is provided the use of a device described above to improve the reading ability of dyslexics.

Although the visual tracking device according to the present invention is particularly useful for reading text, it may be used to aid perception of any form of symbols or markings.

Reference is now made to the accompanying drawings, in which:
Fig. 1 is a perspective view of one embodiment of a visual tracking device according to the invention;
Fig. 2 is a bottom view of the device shown in Fig. 1;
Fig. 3 is a side view of a second embodiment of a visual tracking device according to the invention;
Fig. 4 is a bottom view of the device shown in Fig. 3; and
Fig. 5 illustrates the effect of viewing text using a visual tracking device according to the present invention.

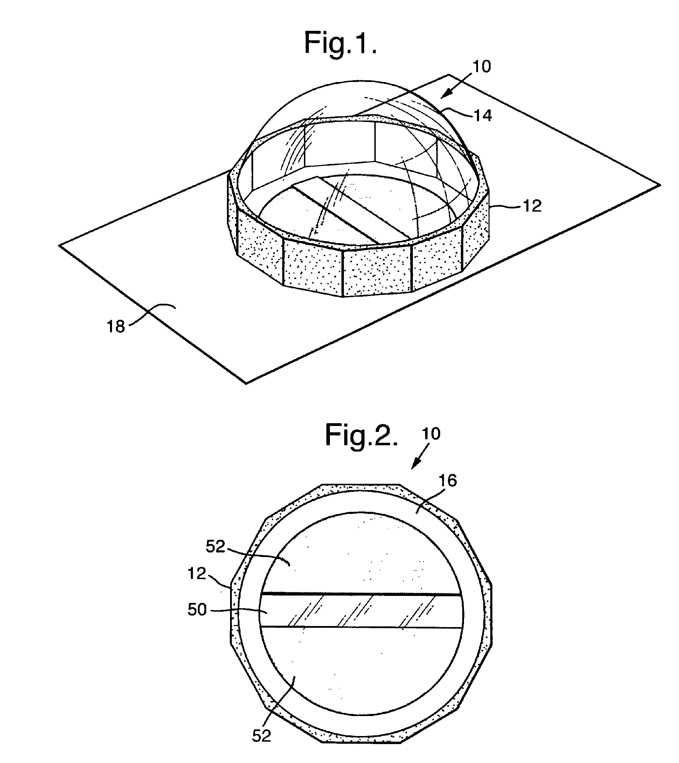

In Figs. 1 and 2 a first embodiment of a visual tracking device is generally designated 10, and comprises a light screening member 12 which is integral with a convex lens 14.

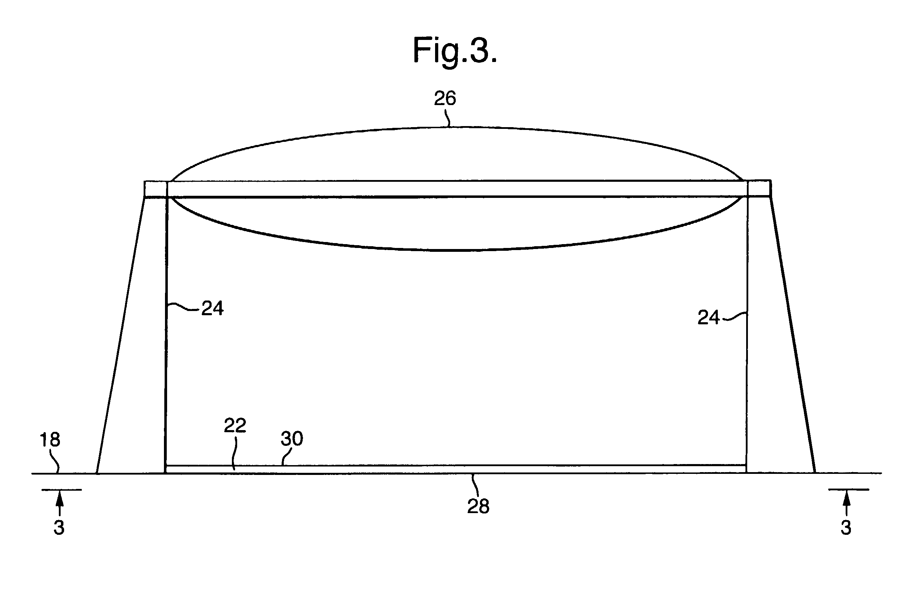

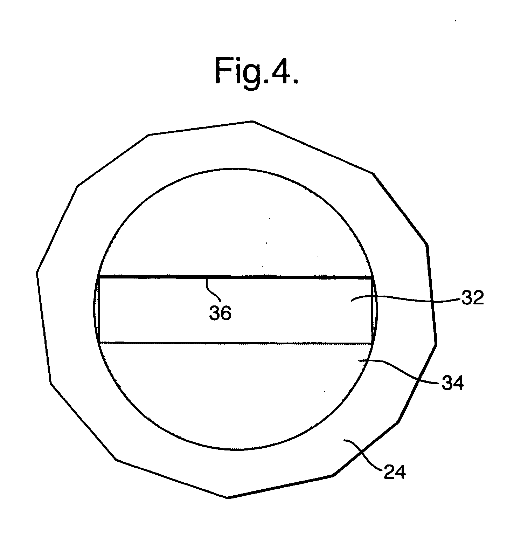

The light screening member 12 has a lower surface 16 which is adapted to engage a surface of a printed page 18. The lower surface 16 is provided with an elongate substantially transparent region 50 and masked region 52. The substantially transparent region 50 has a light transmission which is higher than the masked region 52. The masked region is formed of a plurality of opaque dots, which were provided on the lower surface 16 by transfer from a suitable release film (such as Letraset LT 33). The masked region 52 could instead have been provided in the form of a film adhered to the lower surface 16, as described in connection with Figs. 3 and 4.

In Figs. 3 and 4 a second embodiment of a visual tracking device is generally designated 20 and comprises light screening member which includes a transparent plate 22. The plate 22 is secured to a support means in the form of a stand 24. A lens 26 is secured to an upper end of the stand 24, whereby the lens 26 is spaced from the plate 22.

The plate 22 has a lower surface 28 which is adapted to engage a surface of the printed page 18 and an upper surface 30 which faces the lens 26. The lower surface 28 is provided with a substantially transparent region 32 (i.e. a region of relatively high light transmission) which is surrounded by a masked region 34 (i.e. a region of relatively low light transmission). The masked region 34 is provided by a film having thereon a plurality of discrete areas in the form of dots, the film being adhered to the lower surface 28 of the plate 22, and having a cut-out area corresponding in size and shape to the desired size and shape of the transparent region 32. The masked region 34 could instead have been provided by transfer from a release film, as described in connection with Figs. 1 and 2.

Part of the masked region 34 includes a substantially opaque guide line 36, which helps to align the device 20 along a line of text. In Fig. 4 the guide line 36 is illustrated as if it were at the top of the line of text. It will be appreciated that the device 20 could be oriented so that the guide line 36 appears at the bottom of the line of text, and this arrangement may be preferred by many users. Furthermore, it is possible to provide two of the guide lines 36, one of which is arranged to lie along the top of the line of text, and the other of which is arranged to lie along the bottom of the line of text.

In this embodiment, the transparent area is 42 mm in length and 7 mm in length, but it will be appreciated that a different size could be selected, if desired. Also, the guide line 36 is 0.5 mm thick.

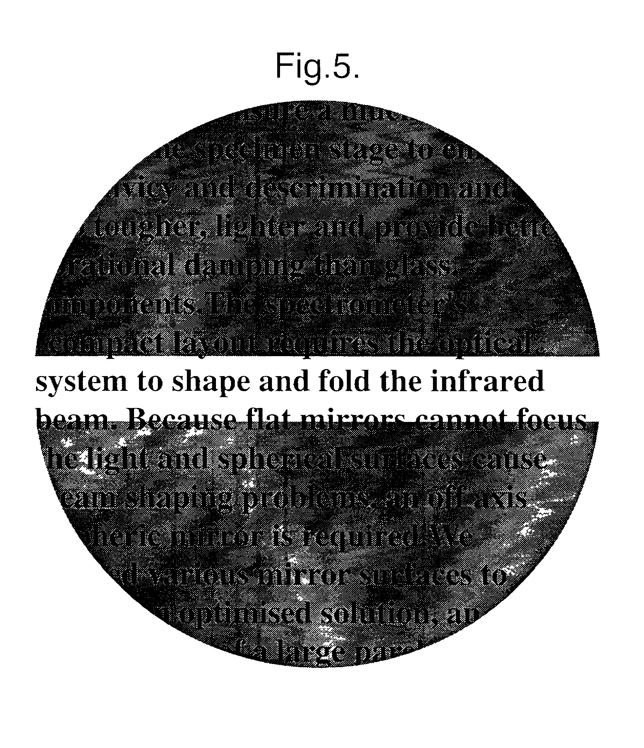

Fig. 5 shows the appearance of text being read using either of the devices 10 or 20. It will be seen that the masking of the text above and below the line to be read, improves the clarity of the line to be read

It will be appreciated that modifications may be made to the invention described above. For example, the transparent and masked regions 32 and 34 could be provided on the upper surface 30 of the plate 22. The masked region 52 could have been provided within the light guide 12 instead of on the surface thereof.

## Claims

1. A visual tracking device comprising a light screening member having a relatively high light transmission region and a relatively low light transmission region adjacent the relatively high light transmission region, whereby markings underlying the high light transmission region are readily discernable and markings underlying the low light transmission region are less readily discernable, wherein the low transmission region is positioned relative to the high transmission region such that, when the device is positioned on a page containing lines of text, the high transmission region permits viewing of a line of text to be read, and the low transmission region at least partially obscures any lines of text above and below the line of text to be read.

2. A visual tracking device according to claim 1, wherein the high transmission region is substantially elongate, and the low transmission region is arranged along substantially the whole length of the elongate edges of the high transmission region.

3. A visual tracking device according to claim 2, wherein the width of the elongate high transmission region is from 3 to 7 mm.

4. A visual tracking device according to claim 1, 2 or 3, wherein the high transmission region is substantially transparent, and the low transmission region has a light transmission below 90%.

5. A visual tracking device according to claim 1, 2, 3 or 4, wherein the low transmission region has a light transmission from 40% to 60%.

6. A visual tracking device according to any preceding claim, wherein the low transmission region includes a plurality of discrete areas on the surface of, or within, the light screening member, the size and density of the discrete areas being selected to provide the low transmission region with the required light transmission.

7. A visual tracking device according to claim 6, wherein there are from 20 to 200 discrete areas/inch (8 to 80 discrete areas/cm)

8. A visual tracking device according to claim 6 or 7, wherein each of the discrete areas is substantially opaque.

9. A visual tracking device according to any preceding claim, wherein the light screening member comprises a substrate having a light transmission substantially equal to the light transmission of the high transmission region and a low transmission layer applied to the substrate in the low transmission region, the low transmission layer having a light transmission substantially equal to the light transmission of the low transmission region.

10. A visual tracking device according to claim 9, when dependent upon claim 6, 7 or 8, wherein the low transmission layer comprises an array of said discrete areas provided on the substrate.

11. A visual tracking device according to any preceding claim, further comprising a lens.

12. A visual tracking device according to claim 11, wherein the lens is integral with the light screening member, the light screening member having a substantially flat surface adapted to engage a page, the arrangement being such that when the light screening member engages the page, the lens is spaced from the page by the light screening member.

13. A visual tracking device according to claim 12, when dependent upon claim 9, wherein the low transmission layer is provided on the flat surface of the light screening member.

14. The use of a device according to any preceding claim as a reading aid.

15. The use of a device according to any one of claims 1 to 13 to improve the reading ability of dyslexics.

16. A method of making a visual tracking member according to any one of claims 1 to 13, comprising applying a transfer layer comprising a release layer having an array of discrete areas thereon to a surface of the substrate, transferring the array of discrete areas from the release layer to the surface of the substrate, and removing the release layer from the substrate.
